# DEMANDE DE BREVET EUROPEEN

(11) **EP 1 661 451 A1**
(43) Date de publication de la demande: **31.05.2006**
(21) Numéro de dépôt: 05292272.1
(22) Date de dépôt: 26.10.2005
(51) Int. Cl.: A01G 17/14

(54) **Perfectionnements aux piquets profilés à section anti-torsion**

(30) Priorité: 29.11.2004 FR 0412626
(71) Demandeur: Julien SA, 84290 Sainte Cecile les Vignes (FR)
(72) Inventeur: Julien, Patrick, 84290 Cairanne (FR)
(74) Mandataire: Somnier, Jean-Louis

(57) **Abrégé**

La présente invention consiste en un piquet métallique (1) apte à supporter au moins un fil de soutien (16) de branches d'arbres exploitées en culture viticole ou fruitière, et dont la section transversale du profilé (2) est de forme sensiblement en U réalisée par pliage d'une bande métallique de largeur initiale d'au moins 100 mm et comportant sur chacune de ses deux ailes (10) au moins quatre pliures (3₁, 3₂, 3₃, 4₁) longitudinale sur toute la hauteur du piquet, dont trois (3₁,3₂,3₃) vers leur extrémité libre (7, la dernière (3₁) formant une boucle tournée vers l'intérieur du profilé (2)et celle (4₁) réalisée à leur extrémité commune (8) avec la base (11) du U, formant les angles avec celle-ci : selon l'invention un tel piquet comporte au moins dix-sept pliures dont au moins sept sur la base (11), chaque pliure commune aux extrémités de la base (11) et d'une aile (7) étant décomptée sur cette aile.

## Description

La présente invention a pour objet des perfectionnements à des piquets profilés à section anti-torsion.

Le secteur technique de l'invention est le domaine de la réalisation de piquets métalliques aptes à supporter au moins un fil de soutien de branches d'arbres exploités en culture de la vigne, des arbres fruitiers ou d'arbres similaires.

On connaît déjà divers types de tels piquets dont celui décrit dans la demande de brevet français FR 15 62363 du 26 mars 1968 qui est un piquet de petite section pleine circulaire de diamètre 8mn comportant des crochets rapportés, fixes, et orientés pour recevoir les fils de soutien, dits de palissage, dans la hauteur hors-terre des piquets ; ceux-ci présentant à la fois une faible inertie et un faible diamètre par rapport à leur longueur, soit risquent de se plier facilement si leur enfoncement dans le sol résiste latéralement, soit se couchent si le terrain lâche autour de cet enfoncement, dès qu'ils sont sollicités par des efforts latéraux : ceci est le cas quand le vent souffle, d'autant plus fortement que l'on se trouve dans des régions très ventées, contre les arbustes soutenus par des fils de soutien supportés par lesdits piquets.

Il a donc été développé des piquets de section plus importante, essentiellement en forme de U tels que ceux décrits dans la demande de brevet FR 25 70575, FR 27 12141 ou FR 28 36331 ou ceux déjà développés à ce jour par le déposant : ces piquets sont réalisés à partir de tôles métalliques pliées et offrent d'une part une largeur d'assise de l'ordre de 50 mm maximum qui leur donne une bonne résistance latérale d'ancrage dans le sol et d'autre part une inertie de section, complétée par quelques pliages, en plus de ceux des angles de la forme en U, formant raidisseurs et essentiellement disposés sur la base et aux extrémités des ailes de celui-ci, qui leur permet de mieux résister à la torsion et à la flexion que le piquet décrit précédemment.

La plupart de ces piquets comportent également des trous de passage pour accrocher des accessoires ou pour passer des fils tendeurs et des linguets ou agrafes formés à partir de la tôle d'acier par découpage et repliement sous forme de languettes pour recevoir latéralement lesdits fils de soutien : suivant leur utilisation alors en tête de rangée ou au milieu de celles-ci ou même en clôture, il faut disposer de différents types de piquets.

De plus, malgré leurs caractéristiques, ces piquets ne sont pas encore assez résistants suivant les efforts auxquels ils sont soumis : ils peuvent plier ou se tordre sous des efforts de vent important et leurs linguets ou agrafes peuvent s'aplatir sous l'effet des chocs des barres batteuses des machines automatiques de cueillette des fruits (raisin ou autre) empêchant de pouvoir dégager ou y enfiler les fils de soutien.

Le problème posé est ainsi de perfectionner de tels piquets pour les rendre plus résistants tant à la torsion qu'à la flexion, sans trop augmenter leur poids, tout en leur donnant une bonne assise dans le sol, en diminuant le nombre de profilés différents selon leur usage et en maintenant leur fabrication à partir de tôles pliées par un minimum de machines de fabrication, au mieux une seule, afin de réduire leur coût de fabrication.

La solution au problème posé est un piquet métallique du type ci-dessus, dont la section transversale du profilé est de forme sensiblement en U, réalisée par pliage d'une bande métallique d'au moins 100 mm de largeur initiale et comportant sur chacune de ses deux ailes, au moins quatre pliures longitudinales sur toute la hauteur du piquet, dont trois vers leur extrémité libre, la dernière formant une boucle tournée vers l'intérieur du profilé et celle, réalisée à leur extrémité commune avec la base du U, formant les angles de chaque aile avec celle-ci ; selon l'invention ledit piquet métallique comporte au moins dix-sept pliures dont au moins sept sur la base du U, chaque pliure commune aux extrémités de la base et d'une aile étant décomptée sur cette aile, et la succession de toutes ces pliures donnant, sur une grande partie de la surface du piquet, un aspect de «tôle ondulée».

On comptera dans toute la présente description, comme pliure, toute déformation du profilé formant un creux sur toute la hauteur du piquet et dont la concavité est tournée soit vers l'intérieur, soit vers l'extérieur du profilé formant ledit piquet. Pour augmenter la résistance à la flexion et à la torsion d'un tel piquet, suivant la présente invention, celui-ci comporte au moins dix-neuf pliures dont six sur chaque aile, et de préférence, vingt-et-une pliures dont treize sur la base, et même un total d'au moins vingt-trois pliures, et de préférence vingt-cinq pliures.

Le résultat est de nouveaux piquets profilés perfectionnés offrant une meilleure résistance à la torsion et à la flexion, pouvant être réalisés dans de grandes dimensions jusqu'à une largeur de la base du profilé de 60 mm, donnant ainsi une meilleure assise d'ancrage dans les sols, tout en étant réalisables sur une seule machine profileuse, comportant de 18 à 19 têtes de galets successives pour pouvoir effectuer de 18 à 20 passes de déformation de la bande métallique à partir de laquelle on réalise le profilé selon l'invention et que l'on coupe ensuite en sortie de machine aux longueurs souhaitées pour réaliser les piquets de la hauteur voulue.

Il n'était pas évident, en effet de penser, et que cela soit de plus possible, à réaliser autant de pliures sur de faces de profilés somme toute assez étroites et pour des épaisseurs de parois de 1,5 à 2 mm pouvant aller jusqu'à 4 mm, avec de l'acier haute résistance tel que celui utilisé préférentiellement de type S250GD, mais pouvant aller jusqu'au S350GD ou même au-delà, cet acier est également galvanisé pour le protéger de la corrosion.

Dans un mode préférentiel de réalisation, les pliures de la base du U sont telles qu'elles donnent à cette base un profil en cuvette dont le creux est tourné vers l'intérieur du profilé : un tel mode de réalisation facilite le rangement des profilés pour leur stockage et leur transport car ceux-ci peuvent alors d'une part se bloquer les uns dans les autres, chaque ouverture d'un U pouvant recevoir la forme convexe de la cuvette de la base du profilé du piquet stocké contre lui et d'autre part en s'emboîtant ainsi permettre un gain de place non négligeable par rapport à des piquets à inertie et poids comparables mais n'offrant pas cette possibilité.

Dans un autre mode particulier de réalisation, le piquet de l'invention comporte au moins trois trous tels que de forme circulaire de 5 à 15 mm de diamètre, obtenus par perçage de la bande métallique et répartis à la fois sur au moins la base et sur une des ailes du profilé en U, et au moins trois linguets dépassant vers l'extérieur du profilé constituant le piquet, obtenus par découpe et pliage de la bande métallique et répartis sur au moins un des côtés du U : en combinant alors ainsi des linguets et des trous à la fois sur les ailes et sur la base du U, et que l'on réalise d'une manière automatique sur la même machine de fabrication par pliage du profilé du piquet, on obtient des piquets multi usages pouvant être utilisés soient en piquets de tête soient en piquets courants, soient même en piquet de clôture avec des linguets sur la base du U.

Dans un mode préférentiel de réalisation, le flanc d'au moins un linguet comporte au moins une double pliure formant un U tournée vers l'intérieur ou vers l'extérieur du profilé et s'étendant parallèlement aux pliures longitudinales du piquet depuis au moins le milieu de la longueur du linguet jusqu'en dessous de sa base : ce mode de réalisation permet d'obtenir une meilleure résistance des linguets à la déformation par choc extérieur grâce au double raidisseur vertical prolongé sous l'embase et d'une forme concave vers l'intérieur. De plus, pour faciliter la bonne introduction du fil de soutien, la forme du linguet, en vue latérale d'une coupe longitudinale, est une courbe en S dont l'extrémité inférieure se prolonge par la paroi du profilé et l'extrémité supérieure est libre et s'écarte de ladite paroi de laquelle il a été découpé.

L'ensemble de ces caractéristiques, complémentaires et pouvant se combiner les unes avec les autres, apportent ainsi de nombreux avantages aux piquets selon l'invention et en démontrent la nouveauté et l'intérêt. La description et les dessins ci-après représentent un exemple de réalisation de l'invention mais n'ont aucun caractère limitatif : d'autres réalisations sont possibles dans le cadre de la portée de l'étendue de cette invention :
- la figure 1 est une vue perspective simplifiée de deux piquets selon l'invention en configuration d'utilisation,
- la figure 2 est une vue en coupe transversale par rapport à l'axe longitudinale de chaque piquet selon l'invention,
- les figures 3A, 3B et 3C représentent les détails d'un linguet selon l'invention respectivement en vue de face, en coupe longitudinale et en coupe transversale.

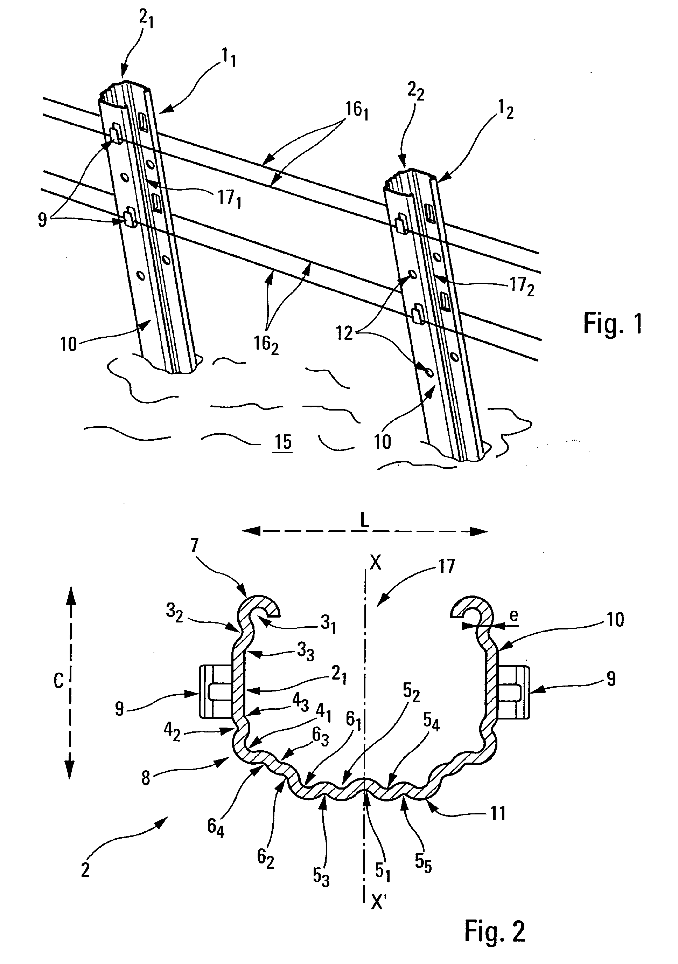

La figure 1 représente donc deux piquets métalliques 1₁ et 1₂ supportant quatre fils 16 de soutien de branches d'arbres ou de vignes, non représentés et qui seraient situés entre lesdits piquets, et qui sont soutenus par des linguets 9 dépassant vers l'extérieur des ailes 10 de la forme en U de chaque profilé 2 formant lesdits piquets 1 et obtenus par découpe et pliage de la bande métallique à partir de laquelle sont fabriqués ces profilés 2 comme expliqué précédemment. Ces linguets 9 sont situés, suivant cette figure 1 ainsi que sur la figure 2, sur les ailes latérales 10 de la forme en U des profilés 2. Ces piquets 1 sont plantés dans le sol 15 de telle façon que l'ouverture 17 de la forme en U soit orientée parallèlement aux fils de soutien 16.

Ces piquets 1 comportent également sur les ailes 10 des trous 12 intercalés entre les linguets 9 pour recevoir éventuellement des accessoires.

Suivant la figure 2, la section transversale du profilé constituant les piquets 1 comporte vingt-cinq pliures :
- six pliures sur chaque aile 10 dont trois 3₁,3₂,3₃ à leur extrémité libre 7, la dernière 3₁ formant une boucle tournée vers l'intérieur du profilé 2,
- trois pliures 4₁,4₂,4₃ à chaque extrémité commune 8 avec la base 11 du U dont celle 4₁, tournée vers l'intérieur du profilé 2 et adjacente à cette base 11 forme l'angle de l'aile 10 avec celle-ci et est décomptée suivant la présente description comme faisant partie de l'aile 10.
- cinq pliures 5i sur la partie de la base 11 du U qui est sensiblement perpendiculaire aux ailes 10 et qui forme le fond de la forme en cuvette de cette base 11 avec une pliure médiane 5₁ située dans le plan de symétrie XX' du profilé 2 et qui est tournée vers l'extérieur de celui-ci, cette pliure 5₁ pouvant comporter des trous 12 pour recevoir divers accessoires tels que des tendeurs quand le piquet correspondant est utilisé en bout de rangée.
- quatre pliures 6₁,6₂,6₃,6₄ sur chaque partie inclinée formant les bords du profil en cuvette de base 11, les premières pliures 6₁ formant les angles entre les bords inclinés et le fond de la cuvette.

Le profilé 2 étant symétrique par rapport au plan XX',il n'est pas utile de référencer les pliures situées sur l'autre côté du profilé et qui sont identiques par rapport à ce plan de symétrie :le profilé 2 ainsi représenté comporte vingt-cinq pliures qui sont réalisées à partir d'une bande métallique initiale de l'ordre de 125 mm de large pour obtenir un profilé de largeur L de 50 mm et de côté C de 40 mm avec des épaisseurs e de 1,5 à 2 mm et pouvoir aller même jusqu'à 4 mm; pour obtenir un profilé de largeur L de 55 mm avec le même nombre de plis, soit 25, la bande métallique initiale fait 130 mm et pour L = 60 mm elle est de 135 mm.

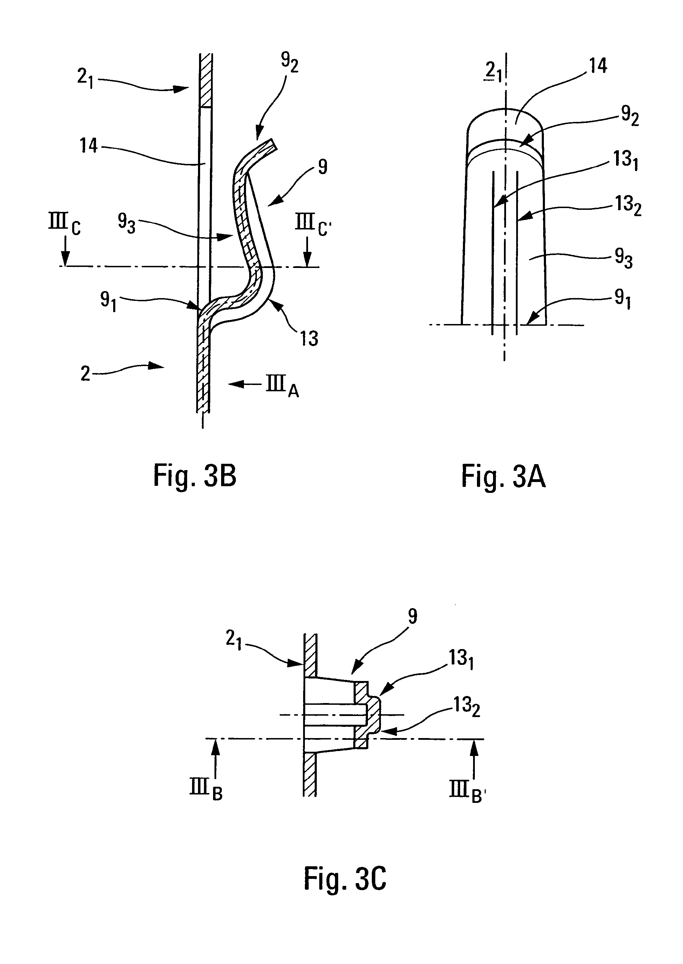

Les pliures 3₁, 3₂, 3₃ et 4₁, 4₂, 4₃ situées respectivement à chaque extrémité de chaque aile 10 laissent entre elles une partie de la paroi 2₁ du profilé 2 plate et non déformée pour recevoir les linguets ou agrafes 9 : suivant la représentation de la figure 3A qu'il est une vue de face suivant IIIA de la figure 3B, ou éventuellement 3C, le flanc 9₃ du linguet 9, découpé dans la paroi 2₁ du profilé 2 dans lequel il laisse ainsi une ouverture 14, comporte au moins une double pliure 13₁, 13₂ formant une rainure en U tournée vers l'intérieur, mais elle pourrait être aussi tournée vers l'extérieur, du profilé 2 visible sur la figure 3C qui est la coupe suivant IIIC, IIIC' de la figure 3B, cette double pliure s'étend parallèlement aux pliures longitudinales du piquet, depuis au moins le milieu de la longueur du linguet 9 et de préférence même depuis les ¾ ou même les 4/5 de sa longueur jusque vers son extrémité libre distale 9₂, et jusqu'en dessous de sa base 9₁, déformant également la partie de la paroi 2₁ située en dessous dudit linguet 9.

Suivant la figure 3B, la forme du linguet 9 en vue latérale d'une coupe longitudinale suivant (IIIB,IIIB') de la figure 3C, est une courbe en S dont l'extrémité inférieure 9₁ se prolonge par la paroi 2₁ du profilé, et qui est elle-même donc déformée comme indiqué ci-dessus par la double pliure 13; et l'extrémité supérieure 9₂ est libre et s'écarte de ladite paroi 2₁, pour former une sorte d'entonnoir avec la paroi 2₁,facilitant l'introduction de fils de soutien, alors que la partie courbée du fond du S forme un logement qui est en partie refermé par la partie recourbée supérieure du S, assurant le maintien du fil de soutien dans ledit linguet.

## Revendications

1. Piquet métallique (1) apte à supporter au moins un fil de soutien (16) de branches d'arbres exploitées en culture viticole ou fruitière, et dont la section transversale du profilé (2) est de forme sensiblement en U réalisée par pliage d'une bande métallique d'au moins 100 mm de largeur initiale et comportant sur chacune de ses deux ailes (10) au moins quatre pliures (3₁,3₂,3₃,4₁) longitudinales sur toute la hauteur du piquet, dont trois (3₁,3₂,3₃) vers leur extrémité libre (7, la dernière (3₁) formant une boucle tournée vers l'intérieur du profilé (2)et celle (4₁) réalisée à leur extrémité commune (8) avec la base (11) du U, formant les angles avec celle-ci, **caractérisé en ce qu'**il comporte au moins dix-sept pliures dont au moins sept sur la base (11), chaque pliure commune aux extrémités de la base (11) et d'une aile (7) étant décomptée sur cette aile.

2. Piquet selon la revendication 1, **caractérisé en ce qu'**il comporte au moins dix-neuf pliures dont six sur chaque aile (7).

3. Piquet selon l'une quelconque des revendications 1 à 2, **caractérisé en ce qu'**il comporte au moins vingt et une pliures dont treize sur la base (11).

4. Piquet selon l'une quelconque des revendications 1 à 3, **caractérisé en ce qu'**il comporte au moins vingt-trois pliures.

5. Piquet selon l'une quelconque des revendications 1 à 4, **caractérisé en ce que** les pliures sur la base (11) du profilé en U sont telles qu'elles donnent à cette base un profil en cuvette dont le creux est tourné vers l'intérieur du profilé (2).

6. Piquet selon l'une quelconque des revendications 1 à 5, **caractérisé en ce qu'**il comporte au moins trois trous (12) obtenus par perçage de la bande métallique et répartis à la fois sur au moins la base et une des ailes (10) du profilé en U.

7. Piquet selon l'une quelconque des revendications 1 à 6, **caractérisé en ce qu'**il comporte au moins trois linguets (9) dépassant vers l'extérieur du profilé (2) constituant le piquet (1, obtenus par découpe et pliage de la bande métallique et répartis sur au moins un des côtés du U.

8. Piquet selon la revendications 7, **caractérisé en ce que** le flanc (9₃) d'au moins un linguet (9) comporte au moins une double pliure (13) formant une rainure en U tournée soit vers l'intérieur, soit vers l'extérieur du profilé (2) et s'étendant parallèlement aux pliures longitudinales du piquet depuis au moins le milieu de la longueur du linguet (9) jusqu'en dessous de sa base (9₁).

9. Piquet selon la revendication 7 ou 8, **caractérisée en ce que** la forme d'au moins un linguet (9) en vue latérale d'une coupe longitudinale est une courbe en S dont l'extrémité inférieure se prolonge par la paroi (2₁) du profilé (2) et l'extrémité supérieure est libre et s'écarte de ladite paroi de laquelle il a été découpé.
